# EUROPÄISCHE PATENTSCHRIFT

(11) **EP 3 685 039 B1**
(45) Veröffentlichungstag und Bekanntmachung des Hinweises auf die Patenterteilung: **24.11.2021**
(21) Anmeldenummer: 18829749.3
(22) Anmeldetag: 06.12.2018
(51) Int. Cl.: F03D 80/80, H01F 27/00, F03D 80/60, H01F 27/02, H01F 27/06

(54) **ANORDNUNG AUS TRANSFORMATORKESSEL UND GONDEL EINER WINDENERGIEANLAGE**
ASSEMBLY CONSISTING OF A TRANSFORMER TANK AND A NACELLE OF A WIND TURBINE
DISPOSITIF COMPOSÉ D'UNE CUVE DE TRANSFORMATEUR ET D'UNE NACELLE D'UNE ÉOLIENNE

(30) Priorität: 20.12.2017 DE 102017223323
(43) Veröffentlichungstag der Anmeldung: 29.07.2020
(73) Patentinhaber: Siemens Energy Global GmbH & Co. KG, 81739 München (DE)
(72) Erfinder: GANGEL, Jürgen, 8160 Weiz (AT); REITBAUER, Franz, 8160 Mortantsch (AT); TRIEB, Dominic, 8162 Passail (AT)
(86) Internationale Anmeldenummer: PCT/EP2018/083825
(87) Internationale Veröffentlichungsnummer: WO 2019/121040

(56) Entgegenhaltungen:
- EP-A1- 2 565 445
- EP-A2- 2 063 119
- CN-Y- 201 092 937
- DE-A1-102007 062 622

## Beschreibung

### GEBIET DER ERFINDUNG

Die Erfindung betrifft eine Anordnung umfassend einen Transformatorkessel, der in einer Gondel einer Windenergieanlage angeordnet ist, wobei der Transformatorkessel dazu ausgebildet ist, mit einem Gas oder einer Flüssigkeit befüllt zu werden, um den Aktivteil des Transformators zu kühlen, wobei der Aktivteil im Betriebszustand des Transformators vom Transformatorkessel flüssigkeitsdicht oder gasdicht umschlossen ist.

Die erfindungsgemäße Anordnung kann für verschiedene Transformatortypen Anwendung finden, insbesondere für flüssigkeitsgefüllte Transformatoren. In der Regel betrifft die Erfindung Leistungstransformatoren.

Der in der Windenergieanlage eingesetzte Transformator umfasst das Transformatorgehäuse und den Aktivteil. Der Aktivteil eines Transformators umfasst die Wicklungen des Transformators und den Transformatorkern. In der Regel umfasst der Aktivteil bei Leistungstransformatoren auch Vorrichtungen, welche die Lage und/oder die Form des Transformatorkerns und/oder der Wicklungen festlegen, wie etwa Pressvorrichtungen.

### STAND DER TECHNIK

Eine Windenergieanlage umfasst einen Turm, eine an dem Turm verdrehbar befestigte Gondel sowie einen Rotor, wobei die Gondel den Rotor trägt, den Triebstrang der Windenergieanlage enthält sowie elektrische Anlagenteile der Windenergieanlage. Entsprechend dem Stand der Technik befindet sich der zur Windenergieanlage gehörende Transformator in der Gondel oder im Turm, siehe hierzu etwa DE 20 2014 004 373 U1.

Der Transformatorkessel des Transformators dient grundsätzlich der Kühlung des Aktivteils des Transformators und als Behälter für die Flüssigkeiten und/oder Gase zur Kühlung. Der Transformatorkessel hatte bisher in Windenergieanlagen keine tragende Funktion für andere Bestandteile der Windenergieanlage. Es gibt Bestrebungen, den Transformatorkessel als versteifendes Element in der mechanischen Struktur der Gondel zu verwenden. Diese mechanische Struktur ist meist eine Stahlbaukonstruktion.

Bisherige Vorschläge zielten darauf ab, den Transformatorkessel selbst, also seine Wände, so zu verstärken, dass der Transformatorkessel bzw. seine Wände selbst stabiler gemacht werden, indem diese etwa verstärkt werden, z.B. dicker ausgeführt werden als bei einem Transformator, der keine tragende Funktion übernehmen muss. Dies führt jedoch zu einer Vergrößerung des Gewichts des Transformatorkessels, die aber z.B. den Transport des Transformators in die Gondel erschwert.

Die EP 2 565 445 A1 offenbart eine Anordnung mit einem Transformatorkessel, der in einer Gondel einer Windenergieanlage angeordnet ist. Der Transformatorkessel kann zur Kühlung des Aktivteils mit einem Gas oder einer Flüssigkeit befüllt werden, wobei der Aktivteil vom Transformatorkessel fluiddicht umschlossen ist.

Weiterer Stand der Technik ist in der DE 10 2007 062 622 A1 und der EP 2 063 119 A2 offenbart.

### DARSTELLUNG DER ERFINDUNG

Es ist somit eine Aufgabe der Erfindung, eine Anordnung umfassend einen Transformatorkessel, der in einer Gondel einer Windenergieanlage angeordnet ist, bereit zu stellen, welche die Nachteile des Stands der Technik überwindet und insbesondere die Verwendung des Transformatorkessels als Versteifung oder Verstrebung der Stahlbaukonstruktion der Gondel mit möglichst geringem zusätzlichen Materialaufwand für den Transformator ermöglicht.

Diese Aufgabe wird erfindungsgemäß durch eine Wicklungsanordnung nach Anspruch 1 gelöst. Ausgangspunkt ist eine Anordnung umfassend einen Transformatorkessel, der in einer Gondel einer Windenergieanlage angeordnet ist, wobei der Transformatorkessel dazu ausgebildet ist, mit einem Gas oder einer Flüssigkeit befüllt zu werden, um den Aktivteil des Transformators zu kühlen, wobei der Aktivteil vom Transformatorkessel flüssigkeitsdicht oder gasdicht umschlossen ist. Dabei ist vorgesehen, dass der Transformatorkessel derart in die mechanische Stützkonstruktion der Gondel eingefügt ist, dass der Transformatorkessel einen Teil der mechanischen Stützkonstruktion der Gondel bildet und dass zumindest eine Verstrebung im Inneren des Transformatorkessels vorgesehen ist, die einander gegenüberliegende Wandbereiche des Transformatorkessels verbindet.

Mit einer oder mehreren Verstrebungen im Inneren des Transformatorkessels kann auf einfache Weise und mit vergleichsweise geringem Materialaufwand die Steifigkeit des Transformatorkessels erhöht werden, ohne die Wände des Transformatorkessels massiver gestalten zu müssen.

Unter den Begriff der Wandbereiche des Transformatorkessels fallen entweder begrenzte Wandbereiche wie der Boden, der Deckel und die einzelnen Seitenwände des Transformatorkessels. In der Regel ist der Transformatorkessel im Wesentlichen quaderförmig aufgebaut. Der Boden und der Deckel sind im Betriebszustand parallel zur Aufstandsfläche in der Gondel ausgerichtet, die - insbesondere vier - Seitenwände (bzw. eine mantelförmig umlaufende Seitenwand, wenn der Transformatorkessel nicht quaderförmig ausgebildet ist) normal zur Aufstandsfläche. Ein Wandbereich des Transformatorkessels kann aber bei einer mantelförmig umlaufenden Seitenwand auch ein Bereich dieser Seitenwand sein.

So kann vorgesehen sein, dass die einander gegenüberliegenden Wandbereiche, die mittels einer oder mehrerer Verstrebungen miteinander verbunden sind, einander gegenüberliegende Seitenwände oder einander gegenüberliegende Wandbereiche einer umlaufenden Seitenwand sind. Es ist aber nicht ausgeschlossen, dass Verstrebungen auch zwischen Deckel und Boden des Transformatorkessels vorgesehen sind.

Eine vorteilhafte Ausführungsvariante der Erfindung besteht darin, dass die Verstrebung zumindest - insbesondere bezüglich ihrer Längserstreckung - teilweise als gerader Träger ausgebildet ist. Die Verstrebung kann etwa ganz oder teilweise als profilierter Stahlträger ausgebildet sein.

Eine vorteilhafte Ausführungsvariante der Erfindung besteht darin, dass zumindest zwei gegenüberliegende Wandbereiche des Transformatorkessels fest mit der mechanischen Stützkonstruktion der Gondel verbunden sind.

In diesem Fall kann vorgesehen sein, dass die Verstrebung dort mit der Wand des Transformatorkessels verbunden ist, wo die Wand des Transformatorkessels mit der mechanischen Stützkonstruktion der Gondel verbunden ist.

Die Verstrebungen können mit besonders geringem Materialaufwand hergestellt werden, wenn zumindest ein Teil der Verstrebung durch den Aktivteil des Transformators gebildet wird. Konstruktive Bauteile des Aktivteils, die an sich nicht mit einer Wand des Transformatorkessels in mechanischer Verbindung stehen, können also mit zusätzlichen Verbindungselementen verbunden werden, die dann eine Verbindung zu den Wänden des Transformatorgehäuses herstellen, wobei der Bauteil des Aktivteils mit den zusätzlichen Verbindungselementen die Verstrebung bildet. Die zusätzlichen Verbindungselemente können z.B. als Stahlträger ausgebildet sein.

Insbesondere kann vorgesehen sein, dass ein Teil der Verstrebung durch einen Bauteil einer Presskonstruktion des Transformatorkerns gebildet wird. Wenn der Transformatorkern aus einzelnen Blechen aufgebaut ist, werden diese mit gegenüberliegend angeordneten Pressplatten oder Pressträgern, die durch Zugmittel miteinander verbunden sind, zusammengepresst. Diese Pressplatten oder Pressträger, z.B. profilierte Träger, können einen Teil der erfindungsgemäßen Verstrebung bilden.

Alternativ oder zusätzlich kann vorgesehen sein, dass ein Teil der Verstrebung durch einen Bauteil einer Presskonstruktion für die Wicklungen gebildet wird. Um die Wicklungen während des Transports und des Betriebs des Transformators in einer definierten Position zu halten, werden die Wicklungen parallel zu ihrer Wicklungsachse mit gegenüberliegend angeordneten Pressplatten oder Pressträgern, die durch Zugmittel miteinander verbunden sind, zusammengepresst. Diese Pressplatten oder Pressträger, z.B. profilierte Träger, können einen Teil der erfindungsgemäßen Verstrebung bilden.

Bei der Verwendung von Bauteilen einer bestehenden Presskonstruktion müssen also keine zusätzlichen Verstrebungen, z.B. Träger, eingesetzt werden, die selbst eine Wand des Transformatorkessels mit einer gegenüberliegenden Wand des Transformatorkessels verbinden, sondern es reicht aus, wenn die Bauteile auf beiden Seiten, z.B. mittels Trägerstücken, verlängert werden und diese Verlängerungen mit den Wänden bzw. Wandbereichen des Transformatorkessels verbunden werden.

Selbstverständlich kann ein im Inneren mit einer oder mehreren erfindungsgemäßen Verstrebungen versehener Transformator auch in anderen mechanischen Stützkonstruktionen eine tragende Funktion übernehmen.

### KURZE BESCHREIBUNG DER FIGUREN

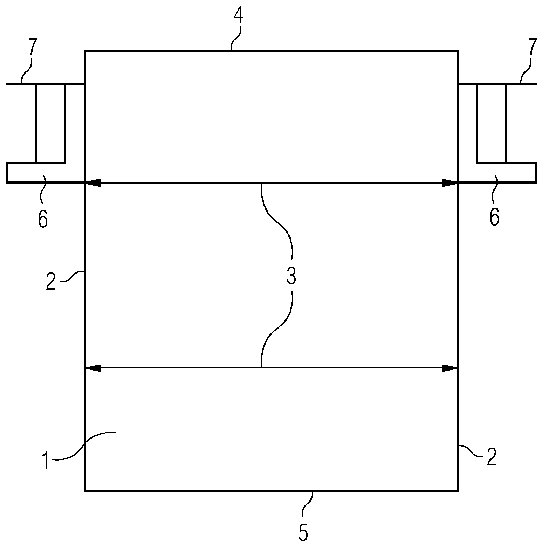

Zur weiteren Erläuterung der Erfindung wird im nachfolgenden Teil der Beschreibung auf die schematische Figur Bezug genommen, aus der weitere vorteilhafte Einzelheiten und mögliche Einsatzgebiete der Erfindung zu entnehmen sind. Die Figur ist als beispielhaft zu verstehen und soll den Erfindungscharakter zwar darlegen, ihn aber keinesfalls einengen oder gar abschließend wiedergeben. Die Figur zeigt einen Längsschnitt durch eine erfindungsgemäße Anordnung.

### WEGE ZUR AUSFÜHRUNG DER ERFINDUNG

Die Figur zeigt einen Längsschnitt durch einen quaderförmigen Transformatorkessel 1. Der Aktivteil des Transformators ist nicht eingezeichnet. Die beiden sichtbaren Wände sind einander gegenüberliegende Seitenwände 2 des Transformatorkessels 1. Zwischen den Seitenwänden 2 sind zwei gerade Verstrebungen 3 eingezeichnet, von denen eine näher am Deckel 4 des Transformatorkessels 1 eine näher am Boden 5 des Transformatorkessels 1 angeordnet ist. An den Stellen, wo die obere Verstrebung 3 mit den Seitenwänden 2 verbunden ist, ist an der Außenseite der Seitenwände 2 ein Verbindungselement 6 angebracht, etwa eine Schiene, welche normal zur Zeichenebene verläuft. Dieses Verbindungselement 6 dient der Verbindung mit der mechanischen Stützkonstruktion 7 der Gondel. Das Verbindungselement 6 ist dort mit der Seitenwand 2 verbunden, wo die obere Verstrebung 3 mit der Innenseite der Seitenwand 2 verbunden ist.

Im Transformatorkessel 1 können natürlich weitere Verstrebungen 3 - insbesondere deckungsgleich zu den beiden dargestellten Verstrebungen 3 - vor und/oder hinter der Schnittebene angeordnet sein.

### Bezugszeichenliste:

- 1: Transformatorkessel
- 2: Seitenwand
- 3: Verstrebung
- 4: Deckel
- 5: Boden
- 6: Verbindungselement
- 7: mechanische Stützkonstruktion der Gondel

## Patentansprüche

1. Anordnung umfassend einen Transformatorkessel (1), der in einer Gondel einer Windenergieanlage angeordnet ist, wobei der Transformatorkessel dazu ausgebildet ist, mit einem Gas oder einer Flüssigkeit befüllt zu werden, um den Aktivteil des Transformators zu kühlen, wobei der Aktivteil vom Transformatorkessel flüssigkeitsdicht oder gasdicht umschlossen ist, **dadurch gekennzeichnet, dass** der Transformatorkessel (1) derart in die mechanische Stützkonstruktion (7) der Gondel eingefügt ist, dass der Transformatorkessel einen Teil der mechanischen Stützkonstruktion der Gondel bildet und dass zumindest eine Verstrebung (3) im Inneren des Transformatorkessels (1) vorgesehen ist, die einander gegenüberliegende Wandbereiche des Transformatorkessels verbindet.

2. Anordnung nach Anspruch 1, **dadurch gekennzeichnet, dass** die einander gegenüberliegenden Wandbereiche einander gegenüberliegende Seitenwände (2) oder einander gegenüberliegende Wandbereiche einer umlaufenden Seitenwand sind.

3. Anordnung nach Anspruch 1 oder 2, **dadurch gekennzeichnet, dass** die Verstrebung (3) zumindest teilweise als gerader Träger ausgebildet ist.

4. Anordnung nach einem der vorhergehenden Ansprüche, **dadurch gekennzeichnet, dass** die zumindest zwei gegenüberliegende Wandbereiche des Transformatorkessels (1) fest mit der mechanischen Stützkonstruktion (7) der Gondel verbunden sind.

5. Anordnung nach einem der vorhergehenden Ansprüche, **dadurch gekennzeichnet, dass** die Verstrebung (3) dort mit der Wand des Transformatorkessels (1) verbunden ist, wo die Wand des Transformatorkessels (1) mit der mechanischen Stützkonstruktion (7) der Gondel verbunden ist.

6. Anordnung nach einem der vorhergehenden Ansprüche, **dadurch gekennzeichnet, dass** zumindest ein Teil der Verstrebung (3) durch den Aktivteil des Transformators gebildet wird.

7. Anordnung nach Anspruch 6, **dadurch gekennzeichnet, dass** ein Teil der Verstrebung (3) durch einen Bauteil einer Presskonstruktion des Transformatorkerns gebildet wird.

8. Anordnung nach Anspruch 6, **dadurch gekennzeichnet, dass** ein Teil der Verstrebung (3) durch einen Bauteil einer Presskonstruktion für die Wicklungen gebildet wird.

## Claims

1. Arrangement comprising a transformer tank (1), which is arranged in a nacelle of a wind turbine, wherein the transformer tank is embodied to be filled with a gas or a liquid in order to cool the active part of the transformer, wherein the active part is enclosed by the transformer tank in a liquid-tight or gas-tight manner, **characterised in that** the transformer tank (1) is inserted into the mechanical supporting structure (7) of the nacelle in such a manner that the transformer tank forms part of the mechanical supporting structure of the nacelle and that at least one brace (3) is provided in the interior of the transformer tank (1), which connects mutually opposing wall regions of the transformer tank.

2. Arrangement according to claim 1, **characterised in that** the mutually opposing wall regions are mutually opposing side walls (2) or mutually opposing wall regions of a surrounding side wall.

3. Arrangement according to claim 1 or 2, **characterised in that** the brace (3) is at least partially embodied as a straight beam.

4. Arrangement according to one of the preceding claims, **characterised in that** the at least two opposing wall regions of the transformer tank (1) are connected to the mechanical supporting structure (7) of the nacelle in a fixed manner.

5. Arrangement according to one of the preceding claims, **characterised in that** the brace (3) is connected to the wall of the transformer tank (1) at the point where the wall of the transformer tank (1) is connected to the mechanical supporting structure (7) of the nacelle.

6. Arrangement according to one of the preceding claims, **characterised in that** at least part of the brace (3) is formed by the active part of the transformer.

7. Arrangement according to claim 6, **characterised in that** part of the brace (3) is formed by a component of a pressing structure of the transformer core.

8. Arrangement according to claim 6, **characterised in that** part of the brace (3) is formed by a component of a pressing structure for the windings.

## Revendications

1. Dispositif comprenant une cuve (1) de transformateur, qui est disposée dans une nacelle d'une installation éolienne, la cuve du transformateur étant constituée pour être remplie d'un gaz ou d'un liquide afin de refroidir la partie active du transformateur, la partie active de la cuve du transformateur étant fermée d'une manière étanche au liquide ou étanche au gaz, **caractérisé en ce que** la cuve (1) du transformateur est insérée dans la construction (7) d'appui mécanique de la nacelle de manière à ce que la cuve du transformateur forme une partie de la construction de l'appui mécanique de la nacelle et **en ce qu'**il est prévu à l'intérieur de la cuve (1) du transformateur au moins un entretoisement (3), qui relie des zones de parois opposées l'une à l'autre de la cuve du transformateur.

2. Dispositif suivant la revendication 1, **caractérisé en ce que** les zones de parois opposées l'une à l'autre sont des parois (2) latérales opposées l'une à l'autre ou des zones de parois opposées l'une à l'autre d'une paroi latérale faisant le tour.

3. Dispositif suivant la revendication 1 ou 2, **caractérisé en ce que** l'entretoisement (3) est constitué au moins en partie sous la forme de poutrelles droites.

4. Dispositif suivant l'une des revendications précédentes, **caractérisé en ce que** les au moins deux zones de parois opposées de la cuve (1) du transformateur sont reliées fixement à la construction (7) d'appui mécanique de la nacelle.

5. Dispositif suivant l'une des revendications précédentes, **caractérisé en ce que** l'entretoisement (3) est relié à la paroi de la cuve (1) du transformateur, là où la paroi de la cuve (1) du transformateur est reliée à la construction (7) d'appui mécanique de la nacelle.

6. Dispositif suivant l'une des revendications précédentes, **caractérisé en ce qu'**au moins une partie de l'entretoisement (3) est formée d'une partie active du transformateur.

7. Dispositif suivant la revendication 6, **caractérisé en ce qu'**une partie de l'entretoisement (3) est formée d'une pièce d'une construction pressée du noyau du transformateur.

8. Dispositif suivant la revendication 6, **caractérisé en ce qu'**une partie de l'entretoisement (3) est formée d'une pièce d'une construction pressée pour les enroulements.
